(19) Europäisches Patentamt
European Patent Office
Office européen des brevets

(11) Veröffentlichungsnummer : **0 168 645**
**B1**

(12) # EUROPÄISCHE PATENTSCHRIFT

(45) Veröffentlichungstag der Patentschrift : **21.12.88**

(51) Int. Cl.⁴ : **C 07 F 7/14**, C 08 G 77/24, C 08 G 77/38

(21) Anmeldenummer : **85107378.3**

(22) Anmeldetag : **14.06.85**

(54) **Perfluoralkylnorbornylsilane oder -siloxane, deren Herstellung und Verwendung.**

(30) Priorität : **27.06.84 DE 3423608**

(43) Veröffentlichungstag der Anmeldung : **22.01.86 Patentblatt 86/04**

(45) Bekanntmachung des Hinweises auf die Patenterteilung : **21.12.88 Patentblatt 88/51**

(84) Benannte Vertragsstaaten : **BE DE FR GB NL**

(56) Entgegenhaltungen :
**WO-A-84 /003 66**
**GB-A- 761 505**
**CHEMICAL ABSTRACTS, Band 66, 1967, Seite 6177, Nr. 65563t, Columbus, Ohio, US; M.A. MAMEDOV et al.: "Effect of the nature of the halogen atom on the addition reaction of silicon hydrides to halogen-containing unsaturated bicyclic compounds"**

(73) Patentinhaber : **Th. Goldschmidt AG**
**Goldschmidtstrasse 100 Postfach 101461**
**D-4300 Essen 1 (DE)**

(72) Erfinder : **Langner, Jaroslav**
**Mathilde-Kaiser-Strasse 23 V**
**D-4300 Essen (DE)**
Erfinder : **Weitemeyer, Christian, Dr.**
**Sundernholz 67**
**D-4300 Essen (DE)**

**EP 0 168 645 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Perfluoralkylnorbornylsilane oder -siloxane, deren Herstellung und Verwendung zur Modifizierung der Oberfläche von Festkörpern, insbesondere von feinteiliger Kieselsäure.

Silane oder Siloxane, welche Fluor- oder Fluorkohlenwasserstoffreste tragen, verleihen Substraten, auf die sie aufgebracht werden, wasser-, öl- und gegebenenfalls schmutzabweisende Eigenschaften. Diese Verbindungen werden deshalb mit Erfolg zur Modifizierung der Eigenschaften anorganischer oder organischer Materialien verwendet. Beispiele solcher Materialien sind Baustoffe, wie Gips, Zement, Mörtel oder geformte Baumaterialien, wie Ziegel aus Ton oder anderen porösen Materialien, Gipsplatten, Betonfertigbauteile.

Eine weitere Anwendung für fluorhaltige Silane oder Siloxane ist die Modifizierung von Pigmenten und Füllstoffen, die in modifizierter Form eine verbesserte Verträglichkeit mit verschiedenen organischen Medien aufweisen. Dies zeigt sich zum Beispiel in der Erleichterung der Einarbeitung von Pigmenten in Bindemittel und in der Verringerung ihrer Tendenz zu Entmischung und Absetzen. Modifiziert man feinteilige, insbesondere pyrogen erzeugte Kieselsäure, bewirkt diese ein verbessertes Schwebeverhalten von Pigmenten, eine Veränderung der Thixotropie und eine Verringerung des Gasens von Zinkstaubfarben.

Weitere Anwendungsmöglichkeiten ergeben sich in der Papierindustrie, wobei die Produkte sowohl dem Papierbrei bei der Papierherstellung zugesetzt wie auf die bereits verfestigte, noch feuchte Papierbahn oder auf das fertige Papier aufgebracht werden können. Fluorsiliciumorganische Verbindungen sind ferner zum Behandeln von textilen Materialien geeignet, die in Form von Fasern, Garnen oder gewebt, gewirkt, gestrickt oder in Vliesform vorliegen können.

Aus der Zeitschrift Zhurnal Obshchei Khimii 36, 1966, 2018-2022, ist es bekannt, Wasserstoffsilane, welche zusätzlich Halogen- und Alkylreste am Siliciumatom gebunden enthalten können, an Norbornenderivate anzulagern. Die Addition erfolgt in iso-Propanol bei etwa 100 °C in Gegenwart von Platinkatalysatoren. Diese Synthese erlaubt auch die Herstellung von fluoralkylsubstituierten, mit Organosiliciumgruppen modifizierten Norbornylverbindungen. So ist z. B. die Umsetzung von Dichlormethylsilane an 5-(Fluormethyl)-2-norbornen beschrieben, die mit 79 %iger Ausbeute bei 60 °C in iso-Propanol unter Zusatz von $H_2PtCl_6$ abläuft.

Diese Verbindungen sind jedoch wenig geeignet, festen Substraten wasser-, öl- und gegebenenfalls schmutzabweisende Eigenschaften zu verleihen. Messungen der Methanolzahl als Maß für die hydrophobierende Wirkung ergaben ungenügende Werte. Auch die kritische Benetzungsspannung wies zu hohe Werte auf.

Der Erfindung liegt deshalb die Aufgabe zugrunde, unter Nutzung dieser bekannten und gut durchzuführenden Additionsreaktion von SiH-Gruppen aufweisenden Organosiliciumverbindungen an substituierte Norbornene Verbindungen zu finden, die für die Modifizierung der Oberfläche von Festkörpern im Sinne einer Erhöhung der Methanolzahl und Erniedrigung der kritischen Benetzungsspannung geeignet sind.

Überraschenderweise wurde gefunden, daß bestimmte, Perfluoralkylgruppen aufweisende Norbornylderivate diese Eigenschaften aufweisen. Gegenstand vorliegender Erfindung sind deshalb neue, Perfluoralkylgruppen aufweisende Verbindungen der allgemeinen Formel:

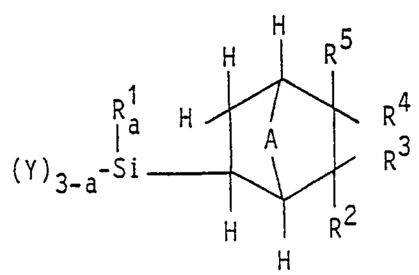

(I)

Die Formel I ist in bezug auf die Substituenten $R^2$ bis $R^5$ nicht auf eine bestimmte räumliche Struktur beschränkt. Sie umfaßt alle stereoisomeren Formeln.

In dieser Formel haben die Indices folgende Bedeutung:

$R^1$ ist ein Methylrest.

Die Reste $R^2$, $R^3$, $R^4$ und $R^5$ sind gleich oder verschieden und bedeuten Wasserstoff- oder Perfluoralkylreste der Formel $-C_nF_{2n-1}$, wobei n eine Zahl von 1 bis 20 ist. Mindestens 1 Rest aus der Gruppe $R^2$-$R^5$ muß jedoch ein Perfluoralkylrest sein. Bevorzugt sind Perfluoralkylreste mit 1 bis 12 Kohlenstoffatomen.

Y ist ein hydrolysierbarer Rest, der direkt an das Siliciumatom gebunden ist, oder ein Hydroxylrest oder ein Organosiloxanylrest. Dem Fachmann sind derartige hydrolysierbare Gruppen bekannt. Es handelt sich hierbei insbesondere um Halogenreste und Kohlenwasserstoffoxyreste, insbesondere Alkoxyreste. Y kann jedoch auch ein Kohlenwasserstoffcarboxyrest, z. B. ein Acetoxyrest oder ein

gegebenenfalls alkylierter Aminorest, sein.

Hat Y die Bedeutung eines Organosiloxanylrestes, kann dieser aus verschiedenfunktionellen Siliciumeinheiten bestehen. Der Organosiloxanylrest kann linear oder verzweigt sein. Es ist auch möglich, daß der Siloxanylrest weitere Gruppen der Formel I, z. B. die Gruppe

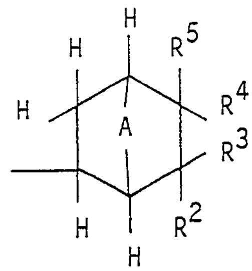

trägt.

A ist der Rest >O oder >$CR_2^6$, wobei $R^6$ gleich oder verschieden ist und einen Wasserstoff- oder Methylrest bedeutet. Die verbrückende Gruppe kann somit die Bedeutung >$CHCH_3$ haben.

a ist eine ganze Zahl und hat die Bedeutung 0, 1, 2 oder 3.

Typische Beispiele erfindungsgemäßer modifizierter siliciumorganischer Verbindungen sind

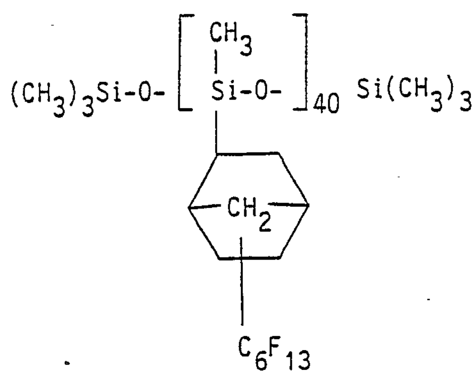

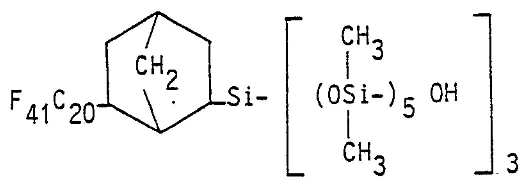

Ein weiterer Gegenstand der Erfindung besteht in dem Verfahren zur Herstellung der neuen siliciumorganischen Verbindungen. Das erfindungsgemäße Verfahren ist dadurch gekennzeichnet, daß man ein 2-Norbornenderivat der allgemeinen Formel

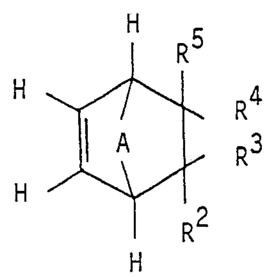

mit einer siliciumorganischen Verbindung der Formel

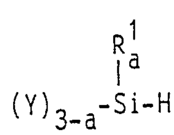

in Gegenwart eines Katalysators für die Anlagerung von —SiH an olefinische Doppelbindungen, insbesondere eines Platinkatalysators, bei Temperaturen oberhalb 60 °C und gegebenenfalls erhöhtem Druck umsetzt.

Die Verbindungen der Formel II sind durch Diels-Alder-Reaktion aus Cyclopentadienen bzw. Furanen und perfluoralkylsubstituierten Olefinen in bekannter Weise erhältlich.

Das erfindungsgemäße Verfahren kann ohne Verwendung von Lösungsmitteln durchgeführt werden. Falls jedoch die siliciumorganische Verbindung, welche die reaktive SiH-Gruppe trägt, aufgrund ihres Molekulargewichtes oder ihrer Struktur hochviskos ist, empfiehlt sich die Verwendung eines inerten Lösungsmittels, z. B. Toluol. Die Reaktion verläuft, wie aus dem Stand der Technik bekannt, mit befriedigender Geschwindigkeit bei Temperaturen oberhalb von 60 °C, insbesondere bei 70 bis 120 °C. Die Anwendung erhöhten Druckes ist nicht erforderlich, jedoch kann die Reaktion durch Erhöhung des Druckes begünstigt werden.

Als Katalysatoren werden die aus dem Stand der Technik bekannten Anlagerungskatalysatoren für Verbindungen mit olefinischen Doppelbindungen an SiH-Gruppen verwendet. Derartige Katalysatoren sind insbesondere Platinkatalysatoren, z. B. chlorsubstituierte Platinverbindungen, wie Hexachloroplatinsäure.

Die erfindungsgemäßen Verbindungen weisen besondere Eigenschaften bei der Modifizierung der Oberfläche von Festkörpern, insbesondere von feinteiliger Kieselsäure auf. Als Maß für die verbesserte Verträglichkeit der modifizierten Kieselsäure mit organischen Medien bzw. für die Unverträglichkeit mit Wasser gilt die Methanolzahl. Diese Methanolzahl ist überraschenderweise im Vergleich zu Polysiloxanen, welche perfluorierte Alkylreste direkt am Siliciumatom tragen, bei Verwendung der erfindungsgemäßen Norbornylderivate stark erhöht. Kieselsäure, modifiziert mit den erfindungsgemäßen Verbindungen, eignet sich deshalb besonders zur Einarbeitung in organische Bindemittel sowie zur Herstellung von Entschäumern für wäßrige Systeme.

Die erfindungsgemäßen Verbindungen können hervorragend zur Oberflächenbehandlung von Baustoffen, wie Ziegeln, Gipsplatten und Betonfertigbauteilen, verwendet werden.

Die erfindungsgemäßen Verbindungen sind ferner zur wasser-, öl- und schmutzabweisenden Imprägnierung von textilen Materialen besonders geeignet.

In den folgenden Beispielen werden die Herstellung und die Verwendung der Verbindungen noch näher beschrieben.

## Beispiel 1

Herstellung von Methyldichlorsilyl-perfluorhexylnorbornan

In einem 100 ml Vierhalskolben, ausgestattet mit einem Rückflußkühler mit $CaCl_2$-Trockenrohr, Thermometer, Magnetrührer und Heizbad, werden 30,9 g 5-Perfluorhexylnorbornen-(2) (75 mMol), eine Lösung von 3 mg $H_2PtCl_6 \cdot 6\ H_2O$ in 1,5 ml Glykoldimethylether und 25 ml Toluol vorgelegt, auf 70 °C erwärmt und 13,0 g $CH_3HSiCl_2$ (113,2 mMol) so zugetropft, daß der Rückfluß minimal ist (Dauer : 7 Minuten). Dann wird weitere 3 Stunden unter Rückfluß gerührt. Die Temperatur steigt dabei von 83 °C auf 104 °C. Überschüssiges $CH_3HSiCl_2$ und Toluol werden abdestilliert, der Rückstand von 38,0 g im Vakuum fraktioniert :

| | |
|---|---|
| I. Fraktion 126-144°/1064 Pa (8 Torr) : | 3,7 g |
| II. Fraktion 144-148°/1064 Pa (8 Torr) : | 28,0 g |
| III. Fraktion 148-150°/1064 Pa (8 Torr) : | 4,0 g |
| Rückstand | 1,6 g |

Gaschromatographische Analyse der II. Fraktion
Reinheit 99,9 %

Cl : 13,40 %, berechnet für 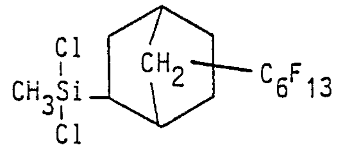 13,47

$^1H$ NMR (in $CDCl_3$) : $\delta$ = 0,78 (s, 3 H) ; $\delta$ = 1,23 (t, 1 H) ;
$\delta$ = 1,35-2,31 (m, 6 H) ; $\delta$ = 2,40-2,96 (m, 3 H)

## Beispiel 2

Herstellung von Bis-1,3 (perfluorhexylnorbornyl)-1,1,3,3-tetramethyldisiloxan

In einem 50 ml Kolben, ausgestattet mit einem Rückflußkühler, einem magnetischen Rührer und

einem Heizbad, werden 8,2 g Perfluorhexylnorbornen-(2) und 1,5 mg $H_2PtCl_6 \cdot 6\ H_2O$ vorgelegt und auf 65 °C erwärmt. Danach werden 1,34 g 1,1,3,3-Tetramethyldisiloxan zugesetzt. Dieses Reaktionsgemisch wird 2 Stunden bei 75 °C gerührt. Die gaschromatographische Analyse des Reaktionsgemisches ergibt 91,6 % eines Isomerengemisches von Bis-1,3(perfluorhexylnorbornyl)-1,1,3,3-tetramethyldisiloxan. Ausbeute des im Vakuum von flüchtigen Anteilen befreiten Produktes : 8,4 g (88,4 % der Theorie).

Beispiel 3

Herstellung von Poly (perfluorhexylnorbornyl) methylsiloxan der Formel

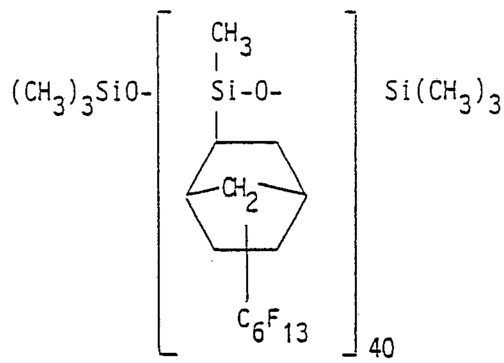

In einer im Beispiel 1 beschriebenen Apparatur werden 58,1 g Perfluorhexylnorbornen-(2) (99,2 %ig, 140 mMol), 1 ml einer Lösung von 4 mg $H_2PtCl_6 \cdot 6\ H_2O$ in 3 ml Glykoldimethylether vorgelegt, auf 70 °C erwärmt und unter Rühren 6,0 g eines Polymethylhydrogensiloxans

$$(CH_3)_3SiO-\ [-CH_3\underset{H}{\underset{|}{Si}}O-]_{40}Si(CH_3)_3$$

während 35 Minuten so zugetropft, daß die Temperatur 110 °C nicht übersteigt. Nach Zusatz von etwa der Hälfte und nach Beendigung der Zugabe des Siloxans wird zusätzlich je 1 ml obiger Katalysatorlösung zugesetzt und das Reaktionsgemisch 3 Stunden bei 100 °C gerührt. Danach werden bei 1995 Pa (15 Torr) und 120 °C Kolbentemperatur die flüchtigen Anteile entfernt. Ausbeute : 43,7 g eines Siloxans, das noch geringe Reste von SiH enthält. Si : 6,9 Gew.-% ; F : 50,9 Gew.-%.

Beispiel 4

Wiederholung des Beispiels 3, jedoch in 46 g Benzotrifluorid als Lösungsmittel. Nach Beendigung der Reaktion werden Benzotrifluorid und andere flüchtige Anteile im Vakuum bis zu einer Kolbentemperatur von 125 °C bei 1995 Pa (15 Torr) abdestilliert. Ausbeute : 46,5 g eines Siloxans mit Si : 6,8 Gew.-% ; F : 51,0 Gew.-%.

Beispiel 5

Herstellung von Poly(perfluordodecylnorbornyl) methylsiloxan der Formel

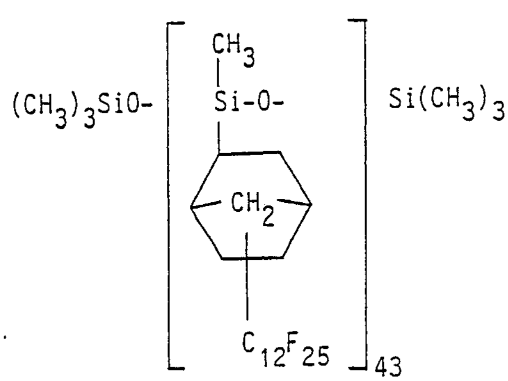

In einer in Beispiel 1 beschriebenen Apparatur werden 99,8 g Perfluordodecylnorbornen-(2) geschmolzen, unter Rühren 1 ml einer Lösung von 4 mg $H_2PtCl_6 \cdot 6\ H_2O$ in 3 ml Diethylenglykoldimethylether zugesetzt und bei 100 °C 6,4 g (100 mVal SiH) eines Polymethylhydrogensiloxans

$$(CH_3)_3SiO-[CH_3\underset{H}{Si}O-]_{43}Si(CH_3)_3$$

im Verlauf von 40 Minuten zugetropft. Nach Zusatz von etwa der Hälfte und nach Beendigung der Zugabe des Siloxans wird zusätzlich je 1 ml obiger Katalysatorlösung zugesetzt und das Reaktionsgemisch anschließend 4 Stunden bei 110 bis 115 °C gerührt. Das Reaktionsprodukt wird in 100 g 1,1,2-Trichlor1,2,2-trifluorethan gelöst und unter Rühren in 250 g Aceton eingegossen, das ausgefällte Produkt abgetrennt und bei 100°/133 Pa (1 Torr) getrocknet. Ausbeute : 67,3 g eines Polysiloxans, das 4,3 Gew.-% Si und 59,9 Gew.-% F enthält.

## Beispiel 6

Herstellung von Polydimethyl-(perfluorhexylnorbornyl-methyl) siloxan der mittleren Formel

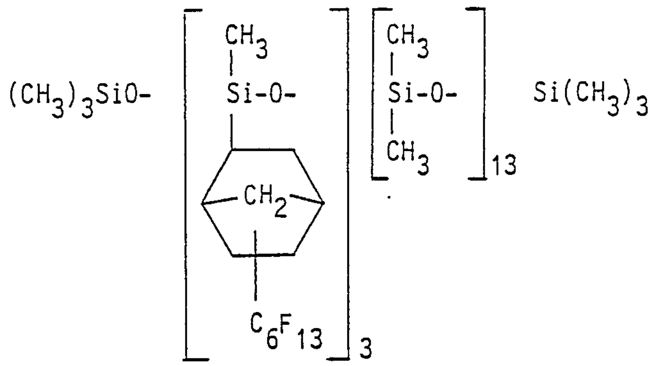

In einer in Beispiel 1 beschriebenen Apparatur werden 20,5 g Perfluorhexylnorbornen-(2) (50 mMol), 3 mg $H_2PtCl_6 \cdot 6\ H_2O$ in 1,5 ml Glykoldimethylether vorgelegt und auf 60 °C unter Rühren erwärmt und während 30 Minuten 23,2 g eines Siloxans der mittleren Formel

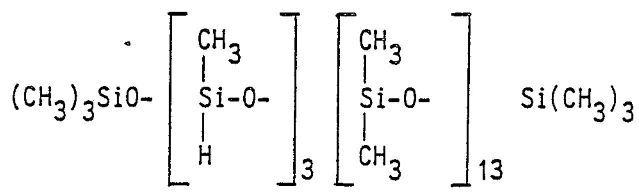

zugetropft. Das Reaktionsgemisch wird bei 75 °C weitere 3 Stunden gerührt, wobei nach 1 Stunde 40 Minuten das ursprünglich nicht homogene Reaktionsgemisch homogen wird. Das Reaktionsgemisch wird im Vakuum (130 °C Kolbentemperatur bei 2660 Pa (20 Torr)) von flüchtigen Anteilen befreit. Ausbeute : 39,2 g (89,7 % der Theorie).

## Beispiel 7

Herstellung von Poly-(dodecylmethyl)-(perfluoroctylnorbornyl-methyl)siloxan der mittleren Formel

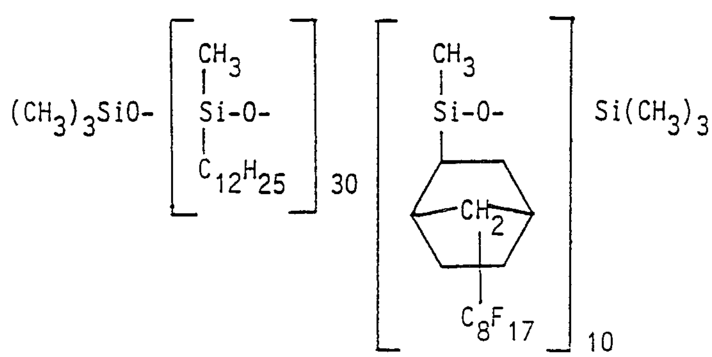

In der in Beispiel 1 beschriebenen Apparatur werden 20,6 g Perfluoroctylnorbornen-(2) (50 mMol) und 3 mg $H_2PtCl_6 \cdot 6\ H_2O$ in 1,5 ml Glykoldimethylether vorgelegt, unter Rühren auf 60 °C erwärmt und in 10 Minuten 12,0 g eines Polysiloxans der mittleren Formel

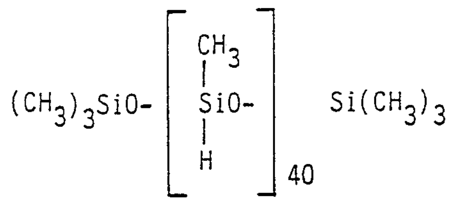

(200 mVal SiH) zugetropft, 20 Minuten bei 65 °C gerührt und anschließend 26,9 g Dodecen-(1) (160 mMol) zugetropft. Die flüchtigen Anteile werden im Vakuum abdestilliert. Ausbeute : 56,1 g (97,1 % der Theorie) eines Polysiloxans der oben angegebenen Formel.

Beispiel 8

Herstellung von Poly (fluormethylnorbornyl) methylsiloxan der Formel

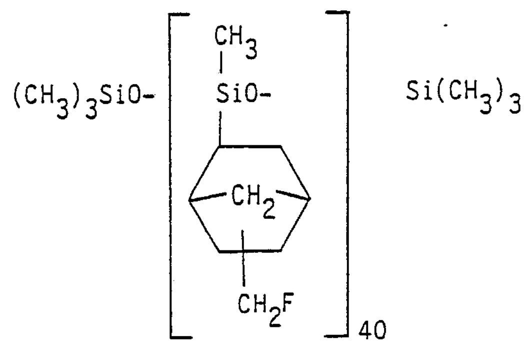

als nicht erfindungsgemäße Vergleichsverbindung.

In der in Beispiel 1 beschriebenen Apparatur werden 52,8 g Fluormethylnorbornen-(2) analog Beispiel 3 mit 3 ml einer Lösung von 4 mg $H_2PtCl_6 \cdot H_2O$ in 3 ml Glycoldimethylether und 18 g eines Polymethylhydrogensiloxans der Formel

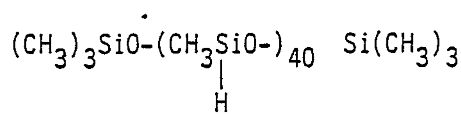

umgesetzt. Nach Abdestillieren flüchtiger Bestandteile im Vakuum (120 °C/1 995 Pa (15 Torr)) erhält man 61,7 g (= 87,2 % der Theorie) des Produktes der oben angegebenen Formel.

Beispiel 9

(Verwendung der erfindungsgemäßen Verbindungen)

In einem Mischgefäß werden 1000 g hochdisperse Kieselsäure mit einer spezifischen Oberfläche von 200 $m^2/g$ vorgelegt und mit einer Lösung von 100 g der zu prüfenden Verbindung in 2 400 g eines geeigneten Lösungsmittels intensiv gemischt. Nach einer Mischzeit von 1 Stunde wird das Lösungsmittel während 2 Stunden bei einer Temperatur von 140 bis 160 °C und Atmosphärendruck entfernt. Die nunmehr lösungsmittelfreie, mit Wirkstoff überzogene hochdisperse Kieselsäure wird dann zur Fixierung des Behandlungsmittels auf der Oberfläche weitere 2 Stunden auf 180 °C erhitzt. Nach dem Abkühlen wird die Hydrophobie der Kieselsäure nach folgender Methode bestimmt :

In einem Schüttelkolben werden 50 ml $H_2O$ und 0,2 g der behandelten Kieselsäure vorgelegt und mit wasserfreiem Methanol titriert, bis die gesamte Kieselsäure in die wäßrige methanolische Phase eindispergiert ist. Der Endpunkt der Titration ist erreicht, wenn weniger als 10 sichtbare Kieselsäureteilchen auf der Oberfläche schwimmen. Die Methanolzahl wird nach

$$\frac{\text{ml } CH_3OH \cdot 100}{50 \text{ ml } H_2O + \text{ml } CH_3OH} = \text{Methanolzahl}$$

errechnet. Die Methanolzahl ist ein Maß für den Grad der Hydrophobierung und steht im Zusammenhang mit der kritischen Benetzungsspannung. Oberhalb dieser kritischen Benetzungsspannung ist eine vollständige Benetzung des behandelten Substrates nicht mehr möglich.

In der folgenden Tabelle sind die Ergebnisse zusammengefaßt.

Tabelle

| | Produkt | Lösungsmittel | Methanolzahl | krit. Benetzungsspannung | |
|---|---|---|---|---|---|
| 1 | Dimethylpolysiloxan Viskosität: 50 mPa.s | Methylethylketon | 20 | 49 dyn/cm | Vergleich |
| 2 | Methylhydrogenpolysiloxan | Methylethylketon | 47,4 | 37 dyn/cm | Vergleich |
| 3 | Trifluorpropylmethylpolysiloxan Viskosität: 1000 mPa.s | Methylethylketon | 22,5 | 48 dyn/cm | Vergleich |
| 4 | Poly(fluormethylnorbornyl)methylpolysiloxan gem. Beispiel 8 | Aceton | 20,8 | 49 dyn/cm | Vergleich |
| 5 | 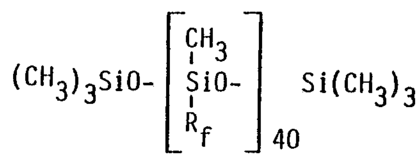 | Trichlortrifluorethan | 73,7 | 28 dyn/cm | erfindungsgemäß |
| 6 | 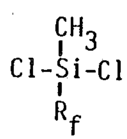 | Aceton | 70,4 | 30 dyn/cm | erfindungsgemäß |

$R_f$ = 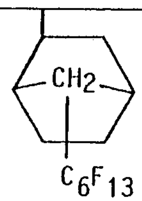

Aus der Tabelle ergibt sich, daß die erfindungsgemäßen Verbindungen eine hohe Methanolzahl mit niedriger kritischer Benetzungsspannung vereinen. Dabei war es insbesondere überraschend, daß die erfindungsgemäßen Perfluoralkylgruppen aufweisenden und mit siliciumorganischen Verbindungen modifizierten Norbornylderivate wesentlich wirksamer als die Perfluoralkylgruppen aufweisenden Polysiloxane (Vergleichsprodukt 3) sind, deren ausgeprägte Hydrophobierwirkung bekannt ist.

**Patentansprüche**

1. Organosiliciumverbindungen der Formel

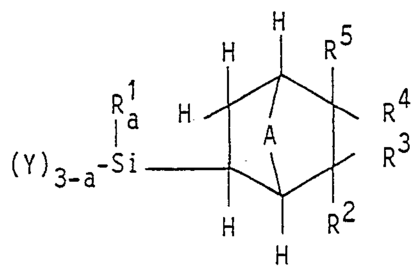

$R^1$ = Methylrest,
$R^2$, $R^3$, $R^4$, $R^5$ = gleich oder verschieden, Wasserstoff- oder $C_nF_{2n-1}$-Rest, wobei n = 1 bis 20 ist, und mindestens einer der Reste $R^2$, $R^3$, $R^4$, $R^5$ ein Perfluoralkylrest ist,
Y = hydrolysierbarer Rest, Hydroxylrest oder Organosiloxanylrest,
A = $>CR_2^6$ oder $>O$, $R^6$ = gleich oder verschieden, Wasserstoff- oder Methylrest,
a = 0, 1, 2 oder 3.

2. Verfahren zur Herstellung der Verbindungen nach Anspruch 1, dadurch gekennzeichnet, daß man ein 2-Norbornenderivat der allgemeinen Formel

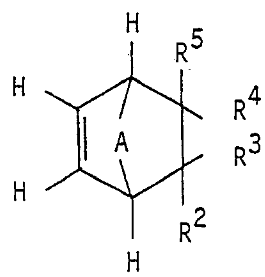

mit einer siliciumorganischen Verbindung der Formel

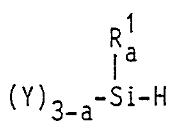

in Gegenwart eines Katalysators für die Anlagerung von —SiH an olefinische Doppelbindungen, insbesondere eines Platinkatalysators, bei Temperaturen oberhalb von 60 °C und gegebenenfalls bei erhöhtem Druck umsetzt.

3. Verwendung der Verbindungen nach Anspruch 1 zur Modifizierung der Oberfläche von Festkörpern, insbesondere von feinteiliger Kieselsäure.

**Claims**

1. Organosilicon compounds of the formula

(See formula page 10)

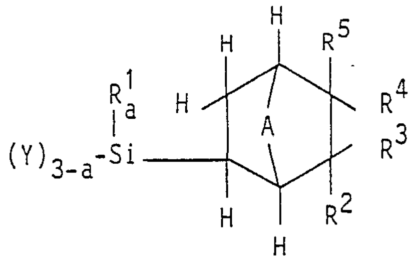

where

$R^1$ denotes a methyl radical,

$R^2$, $R^3$, $R^4$ and $R^5$ are identical or different and denote hydrogen or a $C_nF_{2n-1}$ radical where n is 1 to 20, and at least one of the radicals $R^2$, $R^3$, $R^4$ and $R^5$ is a perfluoroalkyl radical,

Y is a hydrolysable radical, a hydroxyl radical or an organosiloxanyl radical,

A is $>CR_2^6$ or $>O$, where $R^6$ are identical or different and denote hydrogen or methyl radicals, and

a is 0, 1, 2 or 3.

2. A process for the preparation of the compounds according to Claim 1, characterized in that a 2-norbornene derivative of the general formula

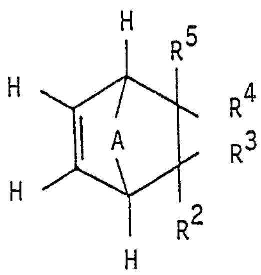

is reacted with an organosilicon compound of the formula

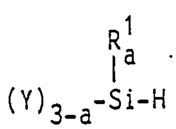

in the presence of a catalyst for the addition of —SiH to olefinic double bonds, in particular a platinum catalyst, at temperatures above 60 °C and optionally at elevated pressure.

3. The use of the compounds according to Claim 1 for modifying the surface of solids, in particular of finely divided silica.

**Revendications**

1. Composés organiques du silicium de formule

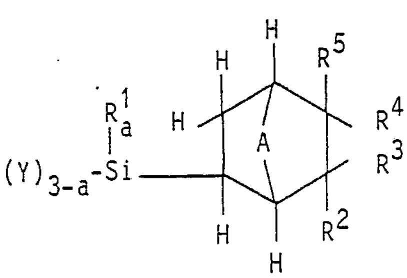

$R^1$ est un radical méthyle,

$R^2$, $R^3$, $R^4$ et $R^5$ sont identiques ou différents et représentent chacun un hydrogène ou un radical

$C_nF_{2n-1}$ où n vaut de 1 à 20, au moins l'un des radicaux $R^2$, $R^3$, $R^4$, $R^5$ étant un radical perfluoralkyle.

Y est un radical hydrolysable, un radical hydroxyle ou un radical organosiloxanyle,

A est $>CR_2^6$ ou $>O$, les radicaux $R^6$ étant identiques ou différents et représentant chacun un radical hydrogène ou méthyle,

a vaut 0, 1, 2 ou 3.

2. Procédé pour la préparation des composés selon la revendication 1, caractérisé en ce qu'on fait réagir un dérivé de 2-norbornène, de formule générale

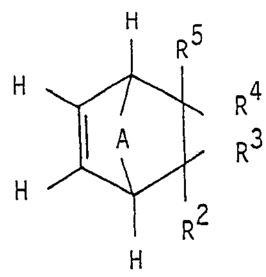

sur un composé organique du silicium de formule

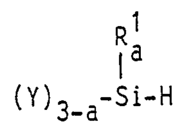

en présence d'un catalyseur pour la fixation de —SiH sur des doubles liaisons oléfiniques, en particulier d'un catalyseur au platine, à des températures supérieures à 60 °C et éventuellement sous pression élevée.

3. Utilisation des composés selon la revendication 1 pour modifier la surface de corps solides, en particulier de silice finement divisée.